# EUROPÄISCHE PATENTSCHRIFT

(11) **EP 2 803 525 B1**
(45) Veröffentlichungstag und Bekanntmachung des Hinweises auf die Patenterteilung: **06.06.2018**
(21) Anmeldenummer: 14001309.5
(22) Anmeldetag: 10.04.2014
(51) Int. Cl.: B60N 2/015, B60N 2/24

(54) **Haltevorrichtung, insbesondere für einen Fahrzeugsitz**
Holding device, in particular for a vehicle seat
Dispositif de fixation, notamment pour un siège de véhicule automobile

(30) Priorität: 15.05.2013 DE 102013008299
(43) Veröffentlichungstag der Anmeldung: 19.11.2014
(73) Patentinhaber: MAN Truck & Bus AG, 80995 München (DE)
(72) Erfinder: Schmieder, Benedikt, 82362 Weilheim (DE); Scherello, Michael, 81234 München (DE); Langguth, Martin, 82131 Gauting (DE)
(74) Vertreter: v. Bezold & Partner Patentanwälte - PartG mbB

(56) Entgegenhaltungen:
- DE-A1-102010 017 038
- DE-A1-102011 017 257
- DE-A1-102012 013 453

## Beschreibung

Die Erfindung betrifft eine Haltevorrichtung, insbesondere für einen Fahrzeugsitz.

DE 10 2012 013453 A1 offenbart eine Haltevorrichtung für einen Fahrzeugsitz, mit wenigstens einem, zwischen wenigstens einer Freigabestellung und wenigstens einer Haltestellung bewegbaren Halteelement, mittels welchem der Fahrzeugsitz in der Haltestellung an einer korrespondierenden Sitzschiene in Fahrzeughochrichtung zu halten ist, wobei das in der Haltestellung mit der Sitzschiene zusammenwirkende Halteelement in der Haltestellung durch Selbsthemmung zwischen wenigstens zwei in der Haltestellung zusammenwirkenden Flächen fixiert ist. Zum allgemeinen Stand der Technik ist ferner auf die DE 10 2010 017038 A1 und die DE 10 2011 017257A1 zu verweisen.

Aus der EP 1 839 931 A2 ist eine ein Halteprofil und Nutensteine umfassende Haltevorrichtung zur Befestigung eines Omnibus-Sitzes bekannt. Das Halteprofil ist als offenes Profil ausgeführt und weist seitlich eine Durchgangsöffnung auf, über die die Nutensteine in das Halteprofil einsetzbar sind. Die Ausrichtung der Nutensteine innerhalb des Halteprofils einerseits und der Aufbau und die Herstellung des Halteprofils andererseits sind relativ aufwendig. Zudem ist eine Zusatzkonstruktion zur Lagerung des Omnibus-Fußbodenaufbaus erforderlich. Ferner ist wegen der seitlichen Positionierung der Durchgangsöffnung der Einsatzbereich der Haltevorrichtung relativ eingeschränkt.

Eine Aufgabe der Erfindung ist es, eine alternative und/oder verbesserte Haltevorrichtung für eine Fahrzeugkomponente, insbesondere einen Fahrzeugsitz zu schaffen.

Diese Aufgabe kann mit den Merkmalen des unabhängigen Anspruchs gelöst werden. Vorteilhafte Weiterbildungen der Erfindung sind der folgenden Beschreibung und den Unteransprüchen zu entnehmen.

Die Erfindung schafft eine Haltevorrichtung für eine Fahrzeugkomponente, z. B. ein Sitzuntergestell für einen Fahrzeugsitz, insbesondere einen Omnibus-Sitz, eine Trennwand, eine Fahrzeug-Mini-Küchen-Struktur oder ein anderes Fahrzeug-Einbauelement. Die Haltevorrichtung umfasst ein Halteprofil, das zum Befestigen eines Tragabschnitts für die Fahrzeugkomponente dient und zumindest eine sich in Längsrichtung des Halteprofils erstreckende Durchgangsöffnung aufweist und somit insbesondere ein offenes Profil darstellt. Die Haltevorrichtung umfasst ferner zumindest einen Nutenstein, der zum Fixieren des Tragabschnitts und somit der Fahrzeugkomponente an dem Halteprofil dient.

Das Halteprofil und der Nutenstein zeichnen sich insbesondere dadurch aus, dass sie mit Zentrierabschnitten versehen sind und die Zentrierabschnitte so ausgeführt sind, dass der Nutenstein innerhalb des Halteprofils mittels eines Befestigungselements (z. B. einer Befestigungsschraube, etc.) selbstzentrierend verspannbar ist.

Es ist möglich, dass der Halteprofil-Zentrierabschnitt und der Nutenstein-Zentrierabschnitt konisch und/oder zweckmäßig seitlich angeschrägt ausgeführt sind, z. B. durch jeweils zwei zulaufende Seitenschrägen.

Der Nutenstein ist vorzugsweise so ausgeführt, dass er, insbesondere längs zur Durchgangsöffnung ausgerichtet, über die Durchgangsöffnung in das Halteprofil eingesetzt werden kann und daraufhin durch eine Drehung zweckmäßig um seine Höhenachse und/oder um die Längsachse des Befestigungselements, z. B. um etwa 90°, innerhalb des Halteprofils festlegbar ist.

Es ist möglich, dass das Halteprofil eine Auflagefläche zur Lagerung einer Fußbodenstruktur (z. B. einer Fußbodenplatte) aufweist. Die Auflagefläche kann vorzugsweise durch einen einwärts zurückspringenden Abschnitt des Halteprofils ausgebildet werden.

Das Halteprofil umfasst vorzugsweise zwei sich entlang der Durchgangsöffnung erstrekkende Schenkel, die als Anlage für den Tragabschnitt dienen.

Die Schenkel stehen zweckmäßig quer, insbesondere orthogonal zur Längsrichtung des Halteprofils nach seitlich außen ab.

Die Schenkel können z. B. jeweils eine nach seitlich außen weisende Stirnfläche aufweisen, die zweckmäßig als Anlage für jeweils einen am Tragabschnitt angeordneten Haltevorsprung dienen kann.

Es ist möglich, dass die Schenkel eine Stützfläche definieren, auf die der Tragabschnitt aufsetzbar ist und die im Betriebszustand des Halteprofils zweckmäßig zumindest nahezu vertikal nach oben orientiert sein kann.

Die Auflagefläche für die Fußbodenstruktur kann ebenso eine Stützfläche definieren, auf die die Fußbodenstruktur aufsetzbar ist und die zweckmäßig im Betriebszustand des Halteprofils zweckmäßig zumindest nahezu vertikal nach oben orientiert sein kann.

Die Auflagefläche für die Fußbodenstruktur und die Schenkel sind vorzugsweise parallel zueinander ausgerichtet.

Die Auflagefläche für die Fußbodenstruktur und der Tragabschnitt sind vorzugsweise so ausgeführt, dass die Fußbodenstruktur durch den Tragabschnitt gegen die Auflagefläche gedrückt wird, wenn der Tragabschnitt mittels dem Nutenstein an dem Halteprofil verspannt wird. Zu diesem Zweck kann der Tragabschnitt mit einem sich vorzugsweise parallel zur Längsrichtung des Hohlprofils verlaufenden Vorsprungsflansch versehen sein. Dadurch ist es möglich, dass das Halteprofil durch den Tragabschnitt und die Fußbodenstruktur gegenüber dem Fahrzeuginnenraum abgedichtet werden.

Es ist möglich, dass die Fahrzeugkomponente, insbesondere der Tragabschnitt nach Montage an das Halteprofil zumindest abschnittsweise die Durchgangsöffnung in Querrichtung des Halteprofils überspannt und somit schließt. Das Halteprofil, das an sich als offenes Profil ausgeführt ist, kann somit als zumindest abschnittsweise geschlossenes Profil wirken, was z. B. tragwerkstechnisch vorteilhaft ist.

Die Haltevorrichtung kann z. B. ein separates Abdeckelement umfassen, um die Durchgangsöffnung neben dem Tragabschnitt quer zur Längsrichtung des Halteprofils zu schließen. Das Abdeckelement kann z. B. durch den Tragabschnitt mittels Überlappung gegen das Halteprofil gedrückt werden oder auf das Halteprofil aufgesteckt werden, um an dem Halteprofil fixiert zu werden.

Es ist möglich, dass das Halteprofil einen insbesondere C-profilförmigen Basisabschnitt und einen zweckmäßig zwei Stege umfassenden Schaftabschnitt aufweist und der Schaftabschnitt an den Basisabschnitt und die zwei Schenkel anschließt, um sie miteinander zu verbinden.

Der Basisabschnitt kann z. B. die Auflagefläche zur Lagerung der Fußbodenstruktur umfassen. Alternativ oder ergänzend kann der Schaftabschnitt zumindest teilweise den Halteprofil-Zentrierabschnitt umfassen und/oder zumindest einen Teil der Durchgangsöffnung begrenzen.

Das Halteprofil ist vorzugsweise zur Integration in eine durch Stabelemente gebildete Rahmenkonstruktion (z. B. eine Gerippekonstruktion) insbesondere für einen Omnibus ausgeführt, um als mittragendes Stabelement der Rahmenkonstruktion zu wirken, z. B. zur Übertragung von Längs- und/oder Querkräften, Biegemomenten, etc..

Es ist möglich, dass der Nutenstein mittels eines Befestigungselements (z. B. einer Befestigungsschraube) an dem Halteprofil verspannbar ist und das Befestigungselement, insbesondere dessen Kraftschlussrichtung, sich parallel zur Hauptbelastungsrichtung der Fahrzeugkomponente und/oder in Schwerkraftrichtung erstreckt, im Rahmen der Erfindung mit einer Abweichung von bis zu 20°, 15°, 10° oder 5°. Im Crash-Fall des Fahrzeugs z. B. wirkt sich das wegen erhöhter Haftreibung positiv auf die Fixierung der Fahrzeugkomponente aus.

Zu erwähnen ist, dass der Nutenstein z. B. mittels eines üblichen Befestigungselements, wie etwa einer Befestigungsschraube, an dem Halteprofil verspannbar ist. Der Nutenstein kann vorzugsweise über die Durchgangsöffnung mittels des Befestigungselements an dem Halteprofil verspannt werden.

Zu erwähnen ist ferner, dass der Tragabschnitt an der Fahrzeugkomponente (z. B. an dem Sitzuntergestell) montiert sein kann, z. B. über Befestigungsmittel, Verschweißung, etc., oder integraler Teil der Fahrzeugkomponente sein kann.

Zu erwähnen ist des Weiteren, dass der Fahrzeugsitz z. B. als Einzelsitz, Doppelsitz oder in Form anderer, insbesondere für Omnibusse geeigneter Sitzkonfigurationen ausgeführt sein kann.

Zu erwähnen ist außerdem, dass das Halteprofil zweckmäßig als Halteschiene ausgeführt ist.

Die Haltevorrichtung dient insbesondere zum Einsatz in einem Kraftfahrzeug, z. B. einem Nutzfahrzeug, wie etwa ein Lastkraftwagen oder ein Omnibus, oder einem Personenkraftwagen.

Die Erfindung ist nicht auf eine Haltevorrichtung beschränkt, sondern umfasst ferner eine Rahmenkonstruktion, z. B. eine Gerippekonstruktion für ein Kraftfahrzeug, vorzugsweise einen Omnibus. Die Rahmenkonstruktion umfasst eine Haltevorrichtung wie hierin beschrieben und insbesondere ein Halteprofil, das in die Rahmenkonstruktion integriert ist und als mittragendes Stabelement der Rahmenkonstruktion wirkt. Die Erfindung umfasst des Weiteren ein Kraftfahrzeug, insbesondere einen Omnibus, mit einer Haltevorrichtung oder einer Rahmenkonstruktion wie hierin beschrieben.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine Querschnittsansicht einer Haltevorrichtung gemäß einer Ausführungsform der Erfindung,
- Fig. 2: zeigt eine Querschnittsansicht der Haltevorrichtung der Figur 1 mit montierter Fahrzeug-Fußbodenstruktur,
- Fig. 3: zeigt eine perspektivische Ansicht der Haltevorrichtung der Figuren 1 und 2,
- Fig. 4: zeigt eine explosionsartige perspektivische Ansicht der Haltevorrichtung der Figuren 1 bis 3,
- Fig. 5: zeigt eine skizzenhafte perspektivische Ansicht der Haltevorrichtung der Figuren 1 bis 4 mit montiertem Fahrzeugsitz, und
- Fig. 6: zeigt einen Teil einer Gerippekonstruktion für einen Omnibus gemäß Stand der Technik.

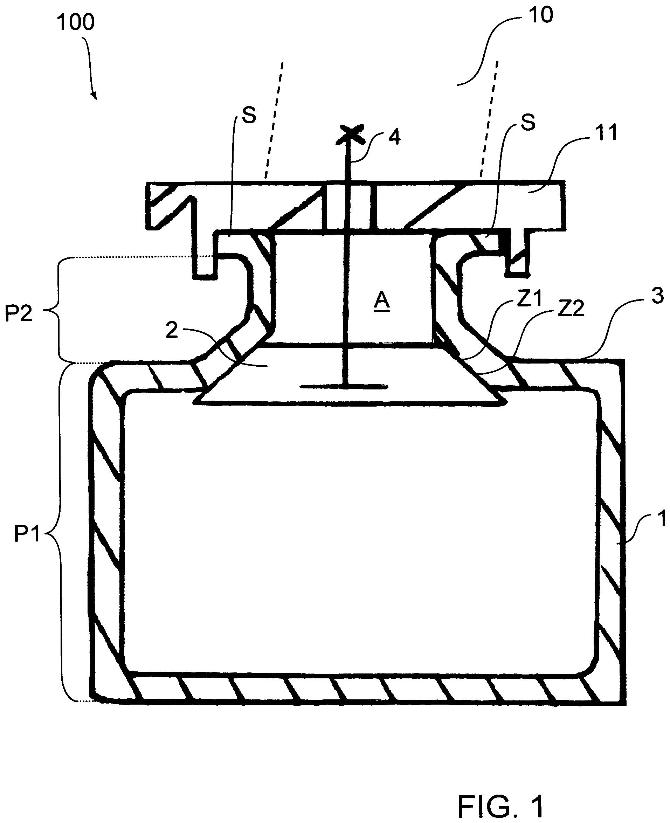

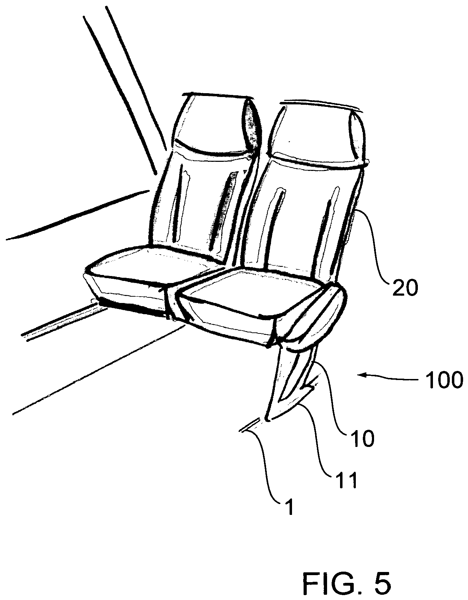

Figur 1 zeigt eine Querschnittsansicht einer Haltevorrichtung 100 für eine Fahrzeugkomponente, insbesondere für ein in Figur 1 nur schematisch dargestelltes Sitzuntergestell 10 für einen Fahrzeugsitz 20 (vgl. Figur 5). Die Haltevorrichtung 100 kann ebenso zum Halten anderer Kraftfahrzeug-Einbauelemente genutzt werden, z B. zum Halten einer Omnibus-Trennwand, einer Omnibus-Mini-Küche, etc..

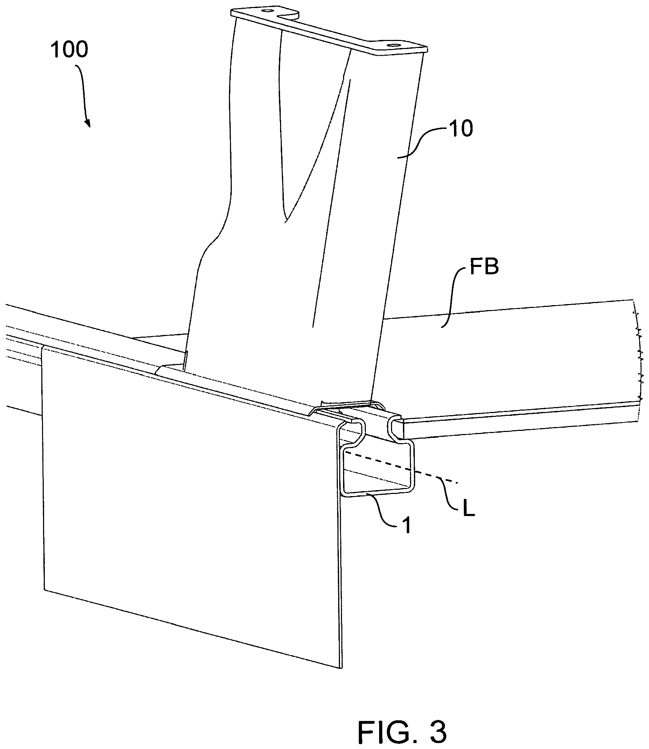

Die Haltevorrichtung 100 umfasst ein Halteprofil 1, das zum Befestigen eines Tragabschnitts 11 des Sitzuntergestells 10 dient und das zumindest eine sich in Längsrichtung L des Halteprofils 1 (vgl. Figur 3) erstreckende Durchgangsöffnung A aufweist. Dadurch, dass sich die Durchgangsöffnung A in Längsrichtung L des Halteprofils 1 erstreckt, entsteht ein quasi offenes Profil. Die Haltevorrichtung 100 umfasst ferner zumindest einen Nutenstein 2, der zum Festlegen des Tragabschnitts 11 und somit des Sitzuntergestells 10 an dem Halteprofil 1 dient.

Das Halteprofil 1 umfasst zwei sich entlang der Durchgangsöffnung A erstreckende, quer zur Längsrichtung L des Halteprofils 1 nach seitlich außen abstehende Schenkel S, die als Anlage für den Tragabschnitt 11 dienen. Die Schenkel S definieren eine Stützfläche für den Tragabschnitt 11, die im Betriebszustand, d. h. einen im Fahrzeug verbauten Zustand, des Halteprofils 1 quasi vertikal nach oben orientiert ist.

Das Halteprofil 1 umfasst ferner einen C-profilförmigen Basisabschnitt P1 und einen zwei Stege umfassenden Schaftabschnitt P2. Der Schaftabschnitt P2 ist zwischen dem Basisabschnitt P1 und den Schenkeln S angeordnet und verbindet den Basisabschnitt P1 und den Schaftabschnitt P2.

Das Halteprofil 1 weist einen konisch ausgeführten Zentrierabschnitt Z1 auf und der Nutenstein 2 weist einen korrespondierenden konisch ausgeführten Zentrierabschnitt Z2 auf. Der Halteprofil-Zentrierabschnitt Z1 und der Nutenstein-Zentrierabschnitt Z2 sind so ausgebildet, dass der Nutenstein 2 innerhalb des Halteprofils 1 selbstzentrierend z. B. mittels eines üblichen Befestigungselements 4 verspannt werden kann. Der Halteprofil-Zentrierabschnitt Z1 und der Nutenstein-Zentrierabschnitt Z2 werden zweckmäßig durch jeweils zwei zulaufende Seitenschrägen gebildet.

Der Nutenstein 2 kann, längs zur Durchgangsöffnung A ausgerichtet, über die Durchgangsöffnung A in das Halteprofil 1 eingeführt werden und durch eine Drehung seinerseits innerhalb des Halteprofils 1 festgelegt und gegen den Halteprofil-Zentrierabschnitt Z1 verspannt werden. Die Verspannung erfolgt über das Befestigungselement 4, das über die Durchgangsöffnung 4 mit dem Nutenstein 2 verbunden ist.

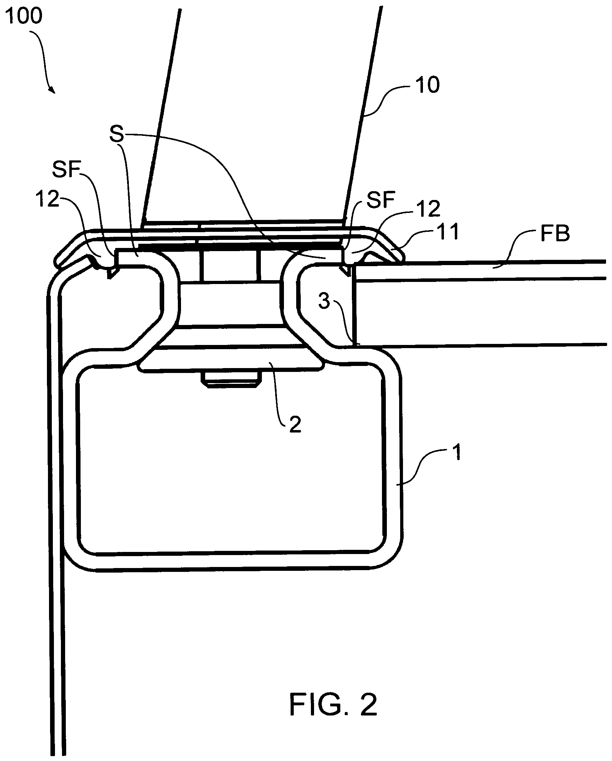

Das Halteprofil 1 umfasst des Weiteren eine Auflagefläche 3, die zur Lagerung einer Fußbodenstruktur FB (vgl. Figuren 2 bis 4) dient. Die Auflagefläche 3 für die Fußbodenstruktur FB wird durch einen einwärts zurückspringenden Teilabschnitt des Halteprofils 1, insbesondere einen Teilabschnitt des Basisabschnitts P1 ausgebildet. Die Auflagefläche 3 für die Fußbodenstruktur FB definiert eine Stützfläche zur Lagerung der Fußbodenstruktur FB. Die Stützfläche ist im Betriebszustand, d. h. in einem im Fahrzeug verbauten Zustand, des Halteprofils 1 zweckmäßig quasi vertikal nach oben orientiert.

Die Auflagefläche 3 für die Fußbodenstruktur FB wird durch den Basisabschnitt P1 gebildet, während der Halteprofil-Zentrierabschnitt Z1 durch den Schaftabschnitt P2 gebildet wird. Die Durchgangsöffnung A wird zumindest teilweise durch den Schaftabschnitt P2 seitlich begrenzt.

Der Tragabschnitt 11 ist so ausgeführt, dass er nach Montage an das Halteprofil 1 zumindest abschnittsweise die Durchgangsöffnung A quer zur Längsrichtung L des Halteprofils 1 überspannt und somit schließt. Das eigentlich als offenes Profil ausgeführte Halteprofil 1 kann somit als zumindest abschnittsweise geschlossenes Profil wirken.

Figur 2 zeigt eine Querschnittsansicht der Haltevorrichtung 100 der Figur 1, allerdings mit montierter Fahrzeug-Fußbodenstruktur FB. Die Fußbodenstruktur FB ist auf der Auflagefläche 3 des Halteprofils 1, insbesondere deren nach oben orientierter Stützfläche gelagert.

Die Auflagefläche 3 für die Fußbodenstruktur FB und der Tragabschnitt 11 sind so ausgeführt, dass die Fußbodenstruktur FB durch den Tragabschnitt 11 gegen die Auflagefläche 3 gedrückt wird, wenn der Tragabschnitt 11 oder allgemein das Sitzuntergestell 10 mittels dem Nutenstein 2 an dem Halteprofil 1 verspannt wird. Zu diesem Zweck ist der Tragabschnitt 11 mit einem sich vorzugsweise parallel zur Längsrichtung L des Halteprofils 1 erstreckenden Vorsprungsflansch versehen.

Die Schenkel S weisen jeweils eine nach außen weisende Stirnfläche SF auf, die als Anlage für jeweils einen an dem Tragabschnitt 11 angeordneten Haltevorsprung 12 dienen. Dadurch kann eine Verklemmung oder sichere Anlage zwischen dem Tragabschnitt 11 und dem Halteprofil 1 erzielt werden.

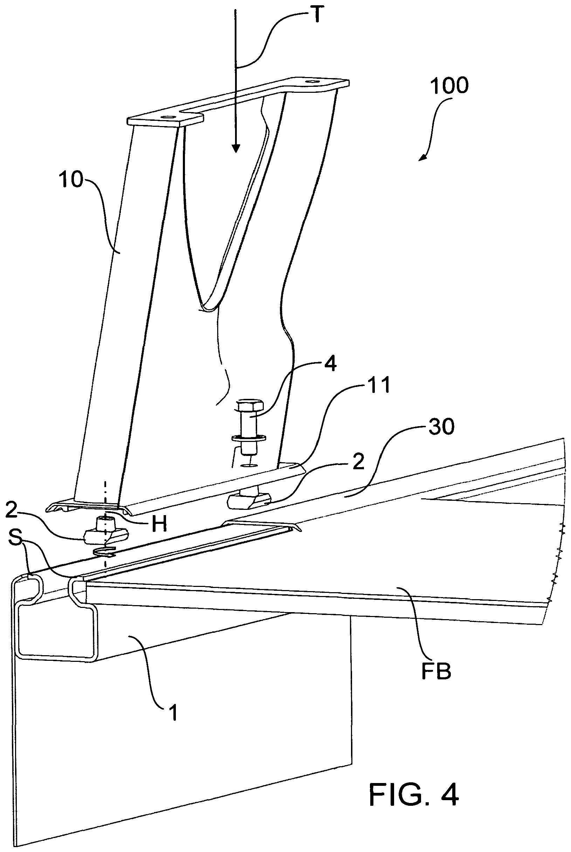

Figur 3 zeigt eine perspektivische Ansicht der Haltevorrichtung 100 der Figuren 1 und 2, während Figur 4 eine zugehörige explosionsartige perspektivische Ansicht zeigt. In den Figuren 3 und 4 sind zur Darstellungszwecken nicht alle Teile der Haltevorrichtung 100 mit Bezugszeichen versehen. Figur 4 kann mitunter nochmals entnommen werden, dass der Nutenstein 2, zweckmäßig längs zur Durchgangsöffnung A ausgerichtet, über die Durchgangsöffnung A in das Halteprofil 1 eingeführt und durch eine Drehung um seine Hochachse H bzw. die Längsachse des Befestigungselements 4 innerhalb des Halteprofils 1 festgelegt und gegen den Halteprofil-Zentrierabschnitt Z1 verspannt werden kann, was in Figur 4 schematisch durch den Drehpfeil angedeutet ist. Figur 4 zeigt außerdem, dass das Befestigungselement 4 im Wesentlichen parallel zur Hauptbelastungsrichtung T des Fahrzeugsitzes 20 und somit quasi in Schwerkraftrichtung verläuft, was sich z. B. im Crash-Fall wegen erhöhter Haftreibung vorteilhaft auswirkt. Ferner ist in Figur 4 zu sehen, dass die Haltevorrichtung 100 ein Abdeckelement 30 umfasst, um die Durchgangsöffnung A neben dem Tragabschnitt 11 quer zur Längsrichtung L des Halteprofils 1 zu schließen. Das Abdeckelement 30 kann durch den Tragabschnitts 11 mittels Überlappung gegen das Halteprofil 1 gedrückt werden, auf das Halteprofil 1 aufgesteckt werden oder anderweitig an dem Halteprofil 1 fixiert werden.

Figur 5 zeigt eine perspektivische Ansicht der Haltevorrichtung 100 der Figuren 1 bis 4, allerdings mit montiertem Fahrzeugsitz 20. Der Fahrzeugsitz 20 ist beispielhaft als üblicher Doppelsitz ausgeführt.

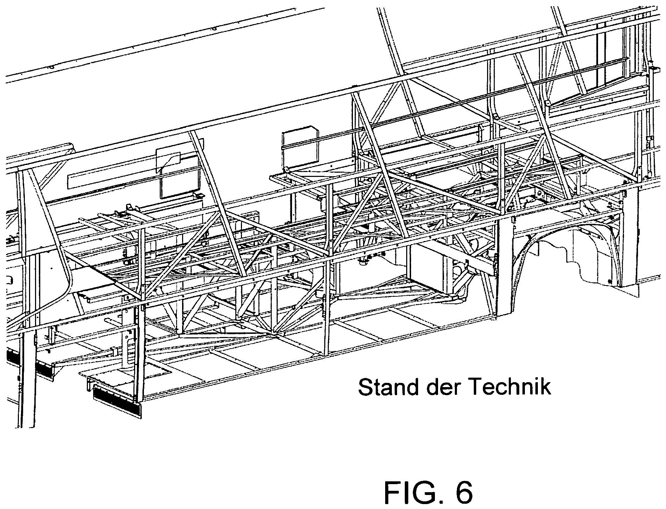

Figur 6 zeigt einen Teil einer Rahmen-, insbesondere Gerippekonstruktion für einen Omnibus gemäß Stand der Technik. Üblicherweise werden Halteprofile zum Befestigen von Sitzuntergestellen an Längsträgern der Gerippestruktur montiert, die sich benachbart entlang eines Mittelgangs des Omnibusses erstrecken. Im Gegensatz dazu ist das erfindungsgemäße Halteprofil 1 zweckmäßig zur Integration in die Gerippekonstruktion ausgeführt, um als mittragendes Teil der Gerippekonstruktion zu wirken, z. B. um selbst Momente und Kräfte der Gerippekonstruktion aufnehmen und weiterleiten zu können.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Halteprofil
- 2: Nutenstein
- 3: Auflagefläche für Fußbodenstruktur
- 4: Befestigungselement
- 10: Sitzuntergestell
- 11: Tragabschnitt
- 12: Haltevorsprung
- 20: Fahrzeugsitz
- 30: Abdeckelement
- 100: Haltevorrichtung
- A: Durchgangsöffnung
- FB: Fußbodenstruktur
- H: Nutenstein-Hochachse
- T: Hauptbelastungsrichtung
- L: Längsrichtung des Halteprofils
- P1: Basisabschnitt
- P2: Schaftabschnitt
- S: Schenkel
- SF: Schenkel-Stirnflächen
- Z1: Halteprofil-Zentrierabschnitt
- Z2: Nutenstein-Zentrierabschnitt

## Patentansprüche

1. Haltevorrichtung (100) für eine Fahrzeugkomponente, vorzugsweise ein Sitzuntergestell (10) für einen Fahrzeugsitz (20) oder ein anderes Fahrzeug-Einbauelement, mit
- einem Halteprofil (1), das zum Befestigen eines Tragabschnitts (11) für die Fahrzeugkomponente dient und das zumindest eine sich in Längsrichtung (L) des Halteprofils (1) erstreckende Durchgangsöffnung (A) aufweist, und
- zumindest einem Nutenstein (2), der zum Fixieren des Tragabschnitts (11) an dem Halteprofil (1) dient,
**dadurch gekennzeichnet, dass**
- das Halteprofil (1) einen Zentrierabschnitt (Z1) aufweist und der Nutenstein (2) einen Zentrierabschnitt (Z2) aufweist und der Halteprofil-Zentrierabschnitt (Z1) und der Nutenstein-Zentrierabschnitt (Z2) so ausgeführt sind, dass der Nutenstein (2) innerhalb des Halteprofils (1) selbstzentrierend verspannbar ist.

2. Haltevorrichtung (100) nach Anspruch 1, **dadurch gekennzeichnet, dass** der Halteprofil-Zentrierabschnitt (Z1) und der Nutenstein-Zentrierabschnitt (Z2) konisch und/oder angeschrägt ausgeführt sind.

3. Haltevorrichtung (100) nach Anspruch 1 oder 2, **dadurch gekennzeichnet, dass** der Nutenstein (2) über die Durchgangsöffnung (A) in das Halteprofil (1) einsetzbar ist und durch eine Drehung seinerseits innerhalb des Halteprofils (1) festlegbar ist.

4. Haltevorrichtung (100) nach einem der vorhergehenden Ansprüche, **dadurch gekennzeichnet, dass** das Halteprofil (1) eine Auflagefläche (3) zur Lagerung einer Fußbodenstruktur (FB) aufweist.

5. Haltevorrichtung (100) nach Anspruch 4, **dadurch gekennzeichnet, dass** die Auflagefläche (3) für die Fußbodenstruktur (FB) durch einen einwärts zurückspringenden Teilabschnitt des Halteprofils (1) ausgebildet wird.

6. Haltevorrichtung (100) nach einem der vorhergehenden Ansprüche, **dadurch gekennzeichnet, dass** das Halteprofil (1) zwei sich entlang der Durchgangsöffnung (A) erstreckende Schenkel (S) als Anlage für den Tragabschnitt (11) aufweist.

7. Haltevorrichtung (100) nach Anspruch 6, **dadurch gekennzeichnet, dass** die Schenkel (S) quer zur Längsrichtung (L) des Halteprofils (1) nach außen abstehen.

8. Haltevorrichtung (100) nach Anspruch 6 oder 7, **dadurch gekennzeichnet, dass** die Schenkel (S) jeweils eine nach außen weisende Stirnfläche (SF) aufweisen, die als Anlage für jeweils einen an dem Tragabschnitt (11) angeordneten Haltevorsprung (12) dienen.

9. Haltevorrichtung (100) nach einem der Ansprüche 6 bis 8, **dadurch gekennzeichnet, dass** die Schenkel (S) eine Stützfläche für den Tragabschnitt (11) definieren und die Stützfläche im Betriebszustand des Halteprofils (1) nach oben orientiert ist.

10. Haltevorrichtung (100) nach einem der Ansprüche 4 bis 9, **dadurch gekennzeichnet, dass** die Auflagefläche (3) eine Stützfläche für die Fußbodenstruktur (FB) definiert und die Stützfläche im Betriebszustand des Halteprofils (1) nach oben orientiert ist.

11. Haltevorrichtung (100) nach einem der Ansprüche 4 bis 10, **dadurch gekennzeichnet, dass** sich die Auflagefläche (3) für die Fußbodenstruktur (FB) und die Schenkel (S) parallel erstrecken.

12. Haltevorrichtung (100) nach einem der Ansprüche 4 bis 11, **dadurch gekennzeichnet, dass** die Auflagefläche (3) für die Fußbodenstruktur (FB) und der Tragabschnitt (11) so ausgeführt sind, dass die Fußbodenstruktur (FB) durch den Tragabschnitt (11) gegen die Auflagefläche (3) gedrückt wird, wenn er mittels dem Nutenstein (2) an dem Halteprofil (1) verspannt wird.

13. Haltevorrichtung (100) nach einem der vorhergehenden Ansprüche, **dadurch gekennzeichnet, dass** der Tragabschnitt (11) nach Montage an das Halteprofil (1) zumindest abschnittsweise die Durchgangsöffnung (A) quer zur Längsrichtung (L) des Halteprofils (1) überspannt und somit schließt.

14. Haltevorrichtung (100) nach einem der vorhergehenden Ansprüche, **dadurch gekennzeichnet, dass** die Haltevorrichtung (100) ein Abdeckelement (30) umfasst, um die Durchgangsöffnung (A) neben dem Tragabschnitt (11) quer zur Längsrichtung (L) des Halteprofils (1) zu schließen.

15. Haltevorrichtung (100) nach einem der Ansprüche 6 bis 14, **dadurch gekennzeichnet, dass** das Halteprofil (1) einen vorzugsweise C-profilförmigen Basisabschnitt (P1) und einen zwei Stege umfassenden Schaftabschnitt (P2) aufweist und der Schaftabschnitt (P2) den Basisabschnitt (P1) und die Schenkel (S) miteinander verbindet

16. Haltevorrichtung (100) nach Anspruch 15, **dadurch gekennzeichnet, dass** der Basisabschnitt (P1) die Auflagefläche (3) zur Lagerung der Fußbodenstruktur (FB) umfasst und der Schaftabschnitt (P2) den Halteprofil-Zentrierabschnitt (Z1) umfasst und vorzugsweise einen Teil der Durchgangsöffnung (A) begrenzt.

17. Haltevorrichtung (100) nach einem der vorhergehenden Ansprüche, **dadurch gekennzeichnet, dass** das Halteprofil (1) zur Integration in eine durch Stabelemente gebildete Rahmenkonstruktion eines Kraftfahrzeugs, insbesondere eines Omnibusses, ausgeführt ist, um als mittragendes Stabelement der Rahmenkonstruktion zu wirken.

18. Haltevorrichtung (100) nach einem der vorhergehenden Ansprüche, **dadurch gekennzeichnet, dass** der Nutenstein (2) mittels eines Befestigungselements (4) an dem Halteprofil (1) verspannbar ist und sich das Befestigungselement (4) im montierten Zustand parallel zur Hauptbelastungsrichtung (T) der Fahrzeugkomponente und/oder in Schwerkraftrichtung erstreckt.

19. Rahmenkonstruktion für ein Kraftfahrzeug, vorzugsweise einen Omnibus, die durch Stabelemente gebildet wird und eine Haltevorrichtung (100) nach einem der vorhergehenden Ansprüche umfasst.

20. Rahmenkonstruktion nach Anspruch 19, **dadurch gekennzeichnet, dass** das Halteprofil (1) in die Rahmenkonstruktion integriert ist und als mittragendes Stabelement der Rahmenkonstruktion wirkt.

21. Kraftfahrzeug, vorzugsweise Omnibus, mit einer Haltevorrichtung (100) nach einem der Ansprüche 1 bis 18 oder einer Rahmenkonstruktion nach einem der Ansprüche 19 oder 20.

## Claims

1. Retaining device (100) for a vehicle component, preferably a seat base frame (10) for a vehicle seat (20) or a further vehicle fitting, comprising
- a retaining profile (1) which serves for fastening a supporting portion (11) for the vehicle component and which has at least one through-opening (A) extending in the longitudinal direction (L) of the retaining profile (1), and
- at least one sliding block (2) which serves for fixing the supporting portion (11) to the retaining profile (1),
**characterized in that**
- the retaining profile (1) has a centring portion (Z1) and the sliding block (2) has a centring portion (Z2) and the retaining profile centring portion (Z1) and the sliding block centring portion (Z2) are designed such that the sliding block (2) is able to be clamped in a self-centring manner inside the retaining profile (1).

2. Retaining device (100) according to Claim 1, **characterized in that** the retaining profile centring portion (Z1) and the sliding block centring portion (Z2) are designed to be conical and/or chamfered.

3. Retaining device (100) according to Claim 1 or 2, **characterized in that** the sliding block (2) is able to be inserted into the retaining profile (1) via the through-opening (A) and by being rotated is able to be secured in turn inside the retaining profile (1).

4. Retaining device (100) according to one of the preceding claims, **characterized in that** the retaining profile (1) has a bearing surface (3) for mounting a floor structure (FB).

5. Retaining device (100) according to Claim 4, **characterized in that** the bearing surface (3) for the floor structure (FB) is configured by a partial portion of the retaining profile (1) springing back inwardly.

6. Retaining device (100) according to one of the preceding claims, **characterized in that** the retaining profile (1) has two legs (S) extending along the through-opening (A) as a support for the supporting portion (11).

7. Retaining device (100) according to Claim 6, **characterized in that** the legs (S) protrude outwardly, transversely to the longitudinal direction (L) of the retaining profile (1).

8. Retaining device (100) according to Claim 6 or 7, **characterized in that** the legs (S) in each case have a front face (SF) facing outwardly, said legs serving as a support for one respective retaining projection (12) arranged on the supporting portion (11).

9. Retaining device (100) according to one of Claims 6 to 8, **characterized in that** the legs (S) define a support surface for the supporting portion (11) and the support surface in the operating state of the retaining profile (1) is oriented upwards.

10. Retaining device (100) according to one of Claims 4 to 9, **characterized in that** the bearing surface (3) defines a support surface for the floor structure (FB) and the support surface in the operating state of the retaining profile (1) is oriented upwards.

11. Retaining device (100) according to one of Claims 4 to 10, **characterized in that** the bearing surface (3) for the floor structure (FB) and the legs (S) extend in parallel.

12. Retaining device (100) according to one of Claims 4 to 11, **characterized in that** the bearing surface (3) for the floor structure (FB) and the supporting portion (11) are designed such that the floor structure (FB) is pressed by the supporting portion (11) against the bearing surface (3) if it is clamped against the retaining profile (1) by means of the sliding block (2).

13. Retaining device (100) according to one of the preceding claims, **characterized in that** the supporting portion (11), after being mounted on the retaining profile (1), at least partially spans and thus closes the through-opening (A) transversely to the longitudinal direction (L) of the retaining profile (1).

14. Retaining device (100) according to one of the preceding claims, **characterized in that** the retaining device (100) comprises a covering element (30) in order to close the through-opening (A) adjacent to the supporting portion (11), transversely to the longitudinal direction (L) of the retaining profile (1).

15. Retaining device (100) according to one of Claims 6 to 14, **characterized in that** the retaining profile (1) has a preferably C-shaped profile base portion (P1) and a shank portion (P2) comprising two connecting portions and the shank portion (P2) connects the base portion (P1) and the legs (S) together.

16. Retaining device (100) according to Claim 15, **characterized in that** the base portion (P1) comprises the bearing surface (3) for mounting the floor structure (FB) and the shank portion (P2) comprises the retaining profile centring portion (Z1) and preferably defines a part of the through-opening (A).

17. Retaining device (100) according to one of the preceding claims, **characterized in that** the retaining profile (1) is designed for integration in a frame structure of a motor vehicle formed by members, in particular of a bus, in order to act as a supporting member of the frame structure.

18. Retaining device (100) according to one of the preceding claims, **characterized in that** the sliding block (2) is able to be clamped by means of a fastening element (4) to the retaining profile (1) and the fastening element (4) in the mounted state extends parallel to the main loading direction (T) of the vehicle component and/or in the direction of gravity.

19. Frame structure for a motor vehicle, preferably a bus which is formed by members and comprises a retaining device (100) according to one of the preceding claims.

20. Frame structure according to Claim 19, **characterized in that** the retaining profile (1) is integrated in the frame structure and acts as a supporting member of the frame structure.

21. Motor vehicle, preferably bus, comprising a retaining device (100) according to one of Claims 1 to 18, or a frame structure according to one of Claims 19 or 20.

## Revendications

1. Dispositif de fixation (100) pour un composant de véhicule, de préférence pour un châssis de siège (10) pour un siège de véhicule (20) ou un autre élément de montage de véhicule, avec
- un profilé de fixation (1), qui sert à fixer une partie de support (11) pour le composant de véhicule et qui présente au moins une ouverture de passage (A) s'étendant dans la direction longitudinale (L) du profilé de fixation (1), et
- au moins un coulisseau (2), qui sert à fixer la partie de support (11) au profilé de fixation (1),
**caractérisé en ce que**
- le profilé de fixation (1) présente une partie de centrage (Z1) et le coulisseau (2) présente une partie de centrage (Z2) et la partie de centrage du profilé de fixation (Z1) et la partie de centrage du coulisseau (Z2) sont réalisées de telle manière que le coulisseau (2) puisse être serré avec auto-centrage à l'intérieur du profilé de fixation (1).

2. Dispositif de fixation (100) selon la revendication 1, **caractérisé en ce que** la partie de centrage du profilé de fixation (Z1) et la partie de centrage du coulisseau (Z2) sont réalisées sous forme conique et/ou chanfreinée.

3. Dispositif de fixation (100) selon la revendication 1 ou 2, **caractérisé en ce que** le coulisseau (2) peut être introduit dans le profilé de fixation (1) par l'ouverture de passage (A) et peut être immobilisé par une rotation de lui-même à l'intérieur du profilé de fixation (1).

4. Dispositif de fixation (100) selon l'une quelconque des revendications précédentes, **caractérisé en ce que** le profilé de maintien (1) présente une face de pose (3) pour la pose d'une structure de plancher (FB).

5. Dispositif de fixation (100) selon la revendication 4, **caractérisé en ce que** la face de pose (3) pour la structure de plancher (FB) est formée par une région partielle du profilé de fixation (1) revenant en retrait vers l'intérieur.

6. Dispositif de fixation (100) selon l'une quelconque des revendications précédentes, **caractérisé en ce que** le profilé de fixation (1) présente deux branches (S) s'étendant le long de l'ouverture de passage (A) en tant qu'appui pour la partie de support (11).

7. Dispositif de fixation (100) selon la revendication 6, **caractérisé en ce que** les branches (S) sont saillantes vers l'extérieur transversalement à la direction longitudinale (L) du profilé de fixation (1).

8. Dispositif de fixation (100) selon la revendication 6 ou 7, **caractérisé en ce que** les branches (S) présentent chacune une face frontale (SF) tournée vers l'extérieur, qui servent d'appui chacune pour une saillie de fixation (12) disposée sur la partie de support (11).

9. Dispositif de fixation (100) selon l'une quelconque des revendications 6 à 8, **caractérisé en ce que** les branches (S) définissent une face d'appui pour la partie de support (11) et la face d'appui est orientée vers le haut dans l'état d'utilisation du profilé de fixation (1).

10. Dispositif de fixation (100) selon l'une quelconque des revendications 4 à 9, **caractérisé en ce que** la face de pose (3) définit une face de support pour la structure de plancher (FB) et la face de support est orientée vers le haut dans l'état d'utilisation du profilé de fixation (1).

11. Dispositif de fixation (100) selon l'une quelconque des revendications 4 à 10, **caractérisé en ce que** la face de pose (3) pour la structure de plancher (FB) et les branches (S) s'étendent parallèlement.

12. Dispositif de fixation (100) selon l'une quelconque des revendications 4 à 11, **caractérisé en ce que** la face de pose (3) pour la structure de plancher (FB) et la partie de support (11) sont réalisées de telle manière que la structure de plancher (FB) soit pressée par la partie de support (11) contre la face de pose (3), lorsqu'elle est serrée sur le profilé de fixation (1) au moyen du coulisseau (2).

13. Dispositif de fixation (100) selon l'une quelconque des revendications précédentes, **caractérisé en ce que** la partie de support (11) recouvre et dès lors ferme au moins localement l'ouverture de passage (A) transversalement à la direction longitudinale (L) du profilé de fixation (1) après le montage sur le profilé de fixation (1).

14. Dispositif de fixation (100) selon l'une quelconque des revendications précédentes, **caractérisé en ce que** le dispositif de fixation (100) comprend un élément de recouvrement (30), afin de fermer l'ouverture de passage (A) à côté de la partie de support (11) transversalement à la direction longitudinale (L) du profilé de fixation (1).

15. Dispositif de fixation (100) selon l'une quelconque des revendications 6 à 14, **caractérisé en ce que** le profilé de fixation (1) présente une partie de base (P1) de préférence en forme de profilé en C et une partie de montant (P2) comprenant deux âmes et la partie de montant (P2) relie l'une à l'autre la partie de base (P1) et les branches (S).

16. Dispositif de fixation (100) selon la revendication 15, **caractérisé en ce que** la partie de base (P1) comprend la face de pose (3) pour la pose de la structure de plancher (FB) et la partie de montant (P2) comprend la partie de centrage du profilé de fixation (Z1) et limite de préférence une partie de l'ouverture de passage (A).

17. Dispositif de fixation (100) selon l'une quelconque des revendications précédentes, **caractérisé en ce que** le profilé de fixation (1) est réalisé en vue de son intégration dans une structure de châssis d'un véhicule automobile, en particulier d'un autobus, formée par des éléments de barre, afin d'agir comme élément de barre porteur d'appoint de la structure de châssis.

18. Dispositif de fixation (100) selon l'une quelconque des revendications précédentes, **caractérisé en ce que** le coulisseau (2) peut être serré sur le profilé de fixation (1) au moyen d'un élément de fixation (4) et l'élément de fixation (4) à l'état monté s'étend parallèlement à la direction de charge principale (T) du composant de véhicule et/ou dans la direction de la force de gravité.

19. Structure de châssis pour un véhicule automobile, de préférence pour un autobus, qui est formée par des éléments de barre et qui comprend un dispositif de fixation (100) selon l'une quelconque des revendications précédentes.

20. Structure de châssis selon la revendication 19, **caractérisée en ce que** le profilé de fixation (1) est intégré dans la structure de châssis et agit comme élément de barre porteur d'appoint de la structure de châssis.

21. Véhicule automobile, de préférence autobus, avec un dispositif de fixation (100) selon l'une quelconque des revendications 1 à 18 ou une structure de châssis selon une des revendications 19 ou 20.
